(19) Europäisches Patentamt

European Patent Office

Office européen des brevets

(11) Veröffentlichungsnummer: **0 257 259 B1**

(12) **EUROPÄISCHE PATENTSCHRIFT**

(45) Veröffentlichungstag der Patentschrift: **15.04.92**

(21) Anmeldenummer: **87109918.0**

(22) Anmeldetag: **09.07.87**

(51) Int. Cl.⁵: $G01F\ 3/22$, $F16C\ 3/28$

(54) **Welle, insbesondere für Balgengaszähler.**

(30) Priorität: **12.07.86 DE 3623596**

(43) Veröffentlichungstag der Anmeldung:
**02.03.88 Patentblatt 88/09**

(45) Bekanntmachung des Hinweises auf die
Patenterteilung:
**15.04.92 Patentblatt 92/16**

(84) Benannte Vertragsstaaten:
**BE DE ES FR GB IT NL**

(56) Entgegenhaltungen:
**GB-A- 510 633**
**GB-A- 725 118**
**GB-A- 1 578 824**

(73) Patentinhaber: **G. Kromschröder Aktiengesellschaft
Adolfstrasse 74 Postfach 2809
W-4500 Osnabrück(DE)**

(72) Erfinder: **Bertke, Heinrich
Theodor-Heuss-Strasse 5
W-4512 Wallenhorst 1(DE)**
Erfinder: **Brüggemann, Reinhard
Charlottenburger Strasse 20
W-4512 Wallenhorst 1(DE)**
Erfinder: **Hampel, Peter**
**Osterstrasse 18
W-4513 Belm(DE)**
Erfinder: **Schmidt, Joachim
Sutthauser Strasse 140
W-4500 Osnabrück(DE)**
Erfinder: **Pohl, Werner
An der Rennbahn 50
W-4535 Westerkappeln(DE)**
Erfinder: **Brönstrup, Martin
Orbecker Weg 15
W-4504 GM-Hütte(DE)**
Erfinder: **Kasselmann, Hans
Hermann-Ehlers-Strasse 6
W-4500 Osnabrück(DE)**
Erfinder: **Lübbers, Hans
Tinner Hauptstrasse 45
W-4472 Haren 3(DE)**
Erfinder: **Prasse, Ingo
Alte Synagogenstrasse 5a
W-4500 Osnabrück(DE)**
Erfinder: **Schamel, Gerhard
Belmer Strasse 85a
W-4500 Osnabrück(DE)**

(74) Vertreter: **Hosbach, Hans Ulrich
c/o Ruhrgas AG Huttropstrasse 60
W-4300 Essen 1(DE)**

## Beschreibung

Die Erfindung betrifft eine Welle, insbesondere für einen Balgengaszähler, mit mindestens einem fest mit der Welle verbundenen Exzenter und einem gegenüber diesem in seiner Winkelversetzung einstellbaren Exzenter, der die Welle umgreift und relativ zum festen Exzenter mittels eines drehbaren Einsatzes verriegelt ist, welcher eine achsparallele, exzentrisch angeordnete Durchgangsöffnung des einstellbaren Exzenters durchgreift.

Bei Balgengaszählern dient eine derartige Welle dazu, die hin- und hergehenden Bewegungen der bewegbaren Welle in eine Drehbewegung umzusetzen und mit dieser wiederum hin- und hergehende Bewegungen von Schiebern zu erzeugen, welche die einzelnen Meßkammern zyklisch an einen Gaseinlaß und einen Gasauslaß anschließen. Die Winkelverstellbarkeit zwischen den Exzentern ist erforderlich, um ein Voreilen der Schieber einzujustieren. Dieses Voreilen bewirkt, daß die Schieber beim Füllhub bereits schließen, bevor die Hubbewegung der jeweils zugehörigen bewegbaren Wände die Endlage erreicht hat. Dies verbessert die Fehlerkurve.

Eine aus der Praxis bekannte Möglichkeit, die Verstellbarkeit zu erzielen, besteht darin, einen der Exzenter als verbiegbaren Kurbelarm auszubilden. Dabei läßt die Genauigkeit der Verstellung stark zu wünschen übrig. Auch ist es aus der Praxis bekannt, einen der Exzenter mit einer Gabel zu verbinden, in deren Armen Einstellschrauben sitzen, die auf einen mit dem anderen Exzenter verbundenen Hebel einwirken. Dabei ist der Einstellvorgang relativ kompliziert.

Die GB 725118 beschreibt eine Welle der eingangs genannten Art, bei der der einstellbare Exzenter auf einem fest mit der Welle verbundenen Träger gelagert und gegenüber diesem mittels einer Schraube arrestiert ist, die durch einen bogenförmigen Schlitz des einstellbaren Exzenters hindurchgreift. Soll eine Winkelverstellung vorgenommen werden, so muß die Schraube gelöst, der einstellbare Exzenter auf dem Träger gedreht, d. h., relativ zur Welle verschwenkt und die Schraube anschließend wieder festgezogen werden. Dieser Vorgang ist ungenau und aufwendig.

Der Erfindung liegt die Aufgabe zugrunde, eine Möglichkeit für eine genaue und einfache Verstellbarkeit der Exzenter zu schaffen.

Zur Lösung dieser Aufgabe ist die erfindungsgemäße Welle dadurch gekennzeichnet, daß der einstellbare Exzenter auf die Welle aufgesteckt und der drehbare Einsatz mit Anschlag in die Durchgangsöffnung des einstellbaren Exzenters eingesteckt ist, wobei der drehbare Einsatz einen achsparallelen, zu seiner Drehachse exzentrisch versetzten Zapfen, der in einen radialen Schlitz eines wellenfesten Teils eingreift, sowie einen radialen Vorsprung aufweist, der nach einer Drehung des Einsatzes zur Herstellung einer axialen Verriegelung in eine radiale Ausnehmung der Welle eingreift.

Zwar ist aus der GB 1578824 eine Anordnung bekannt, bei der der drehbare Einsatz in die Durchgangsöffnung des einstellbare Exzenters eingesteckt ist, wobei er einen achsparallelen, zu seiner Drehachse exzentrisch versetzten Zapfen aufweist, der in einen radialen Schlitz eines wellenfesten Teils eingreift, jedoch ist hier der einstellbare Exzenter nicht auf die Welle aufgesteckt. Vielmehr ist er auf den fest mit der Welle verbundenen Exzenter aufgelegt, wobei eine Zapfenverbindung den Drehpunkt definiert. Der untere Exzenter ist mit einer an der Welle befestigten Anordnung verschraubt, wobei diese Schraube durch den oberen Exzenter hindurchgreift. Ferner bedarf der drehbare Einsatz noch einer gesonderten Befestigung. Auch hier sind also Konstruktion und Bedienung aufwendig.

Durch die Erfindung hingegen wird eine besonders einfache Konstruktion und Montage erzielt. Nach Aufstecken des einstellbaren Exzenters auf die Welle wird in diesen Exzenter der drehbare Einsatz mit Anschlag eingesteckt und verdreht. Damit sind sämtliche Teile gegeneinander verriegelt. Der Eingriff des radialen Vorsprungs des Einsatzes in die radiale Ausnehmung der Welle ermöglicht hin- und hergehende Drehbewegungen des Einsatzes, ohne daß die Verriegelungsstellung verlassen würde.

Dabei ermöglicht das einfache Verdrehen des Einsatzes eine sehr genaue Verstellung des einstellbaren Exzenters gegenüber der Welle und damit gegenüber dem fest mit der Welle verbundenen Exzenter. Die Exzentrizität des Zapfens bestimmt das in vorwählbarer Weise einstellbare Übersetzungsverhältnis, mit dem die Drehbewegung des Einsatzes in eine Verstellung des Exzenters umgesetzt wird. Damit sind beliebige Einstellungsgenauigkeiten erzielbar.

Dabei ist es besonders vorteilhaft, daß der wellenfeste Teil, in dessen radialen Schlitz der Zapfen des Einsatzes eingreift, vom festen Exzenter gebildet wird. Es bedarf also keines zusätzlichen Ansatzes an der Welle zum Tragen des radialen Schlitzes.

Vorzugsweise wirken der einstellbare Exzenter und der Einsatz durch Ausbildung von Vorsprüngen einerseits und Vertiefungen andererseits selbsthemmend zusammen. Dies garantiert die Einhaltung der gewählten Verstellung, ohne die Notwendigkeit zusätzlicher Sicherungen.

Nach einem weiteren vorteilhaften Merkmal der Erfindung ist der Einsatz als Zeiger ausgebildet, der eine auf dem einstellbaren Exzenter angeordnete Skala überstreicht. Dies erleichtert eine extrem genaue Verstellbarkeit der Exzenter gegeneinander.

Dabei können erfindungsgemäß die Skala und der Zeiger einerseits mit Vorsprüngen und andererseits mit Vertiefungen versehen sein, die selbsthemmend zusammenwirken.

Die Erfindung wird im folgenden anhand eines bevorzugten Ausführungsbeispiels im Zusammenhang mit der beiliegenden Zeichnung näher erläutert. Die Zeichnung zeigt in:

Figur 1 einen Vertikalschnitt durch die Welle mit den Exzentern in zusammengebautem Zustand;

Figur 2 einen Grundriß der Welle gemäß Figur 1;

Figur 3 einen Grundriß des weiteren Exzenters als Einzelteil;

Figur 4 einen Grundriß der Welle nach Abnahme des weiteren Exzenters.

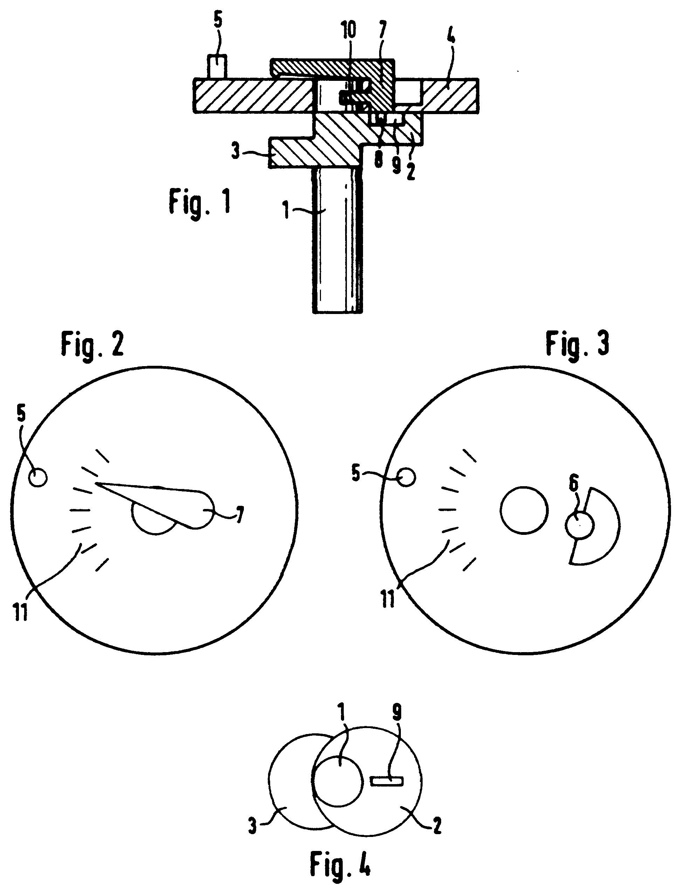

Nach Figur 1 trägt eine Welle 1 einen ersten Exzenter 2 und darunter einen zweiten Exzenter 3. Die Exzenter 2 und 3 sind fest mit der Welle 1 verbunden, im vorliegenden Fall einstückig mit ihr ausgebildet. Sie dienen zur Steuerung der Schieber eines Balgengaszählers.

Auf die Welle 1 ist ferner ein weiterer Exzenter 4 aufgesteckt, an dessen Zapfen 5 die Gestänge der bewegbaren Wände des Balgengaszählers angreifen. Gemäß Figur 3 ist der weitere Exzenter 4 mit einer achsparallelen, exzentrisch angeordneten Durchgangsöffnung 6 versehen, in die ein Einsatz 7 einsteckbar ist. Der Einsatz 7 trägt einen achsparallelen, zu seiner Drehachse exzentrisch versetzten Zapfen 8, mit dem er in einen radial zur Welle 1 angeordneten Schlitz 9 des ersten Exzenters 2 eingreift. Ferner ist der Einsatz 7 mit einem radialen Vorsprung 10 versehen, mit dem er in eine bajonettverschlußartige Verriegelung mit der Welle 1 hineingedreht werden kann.

In der Position nach Figur 1 sind die die Vorrichtung bildenden drei Teile in axialer Richtung gegeneinander verriegelt. Ferner ist der weitere Exzenter 4 drehfest mit der Welle 1 verbunden, und zwar über den Eingriff des Zapfens 8 in den Schlitz 9.

Durch Drehen des Einsatzes 7 läßt sich die Winkelversetzung des weiteren Exzenters 4 gegenüber den wellenfesten Exzentern 2 und 3 sehr einfach und genau verstellen.

Gemäß Figur 2 ist der Einsatz 7 als Zeiger ausgebildet. Er überstreicht eine auf dem weiteren Exzenter 4 angeordnete Skala. Zeiger und Skala greifen rasterartig-elastisch ineinander und erzeugen dadurch eine Selbsthemmung, die jede weitere Sicherung überflüssig macht.

Die Exzentrizität des Zapfens 8 ist im vorliegenden Fall so gewählt, daß eine Verdrehung des Einsatzes 7 um 90° zu einer Exzenterverstellung von 20° führt.

## Patentansprüche

1. Welle, insbesondere für einen Balgengaszähler, mit mindestens einem fest mit der Welle verbunden Exzenter und einem gegenüber diesem in seiner Winkelversetzung einstellbaren Exzenter, der die Welle umgreift und relativ zum festen Exzenter mittels eines drehbaren Einsatzes verriegelt ist, welcher eine achsparallele, exzentrisch angeordnete Durchgangsöffnung des einstellbaren Exzenters durchgreift, dadurch gekennzeichnet, daß der einstellbare Exzenter (4) auf die Welle (1) aufgesteckt und der drehbare Einsatz (7) mit Anschlag in die Durchgangsöffnung (6) des einstellbaren Exzenters (4) eingesteckt ist, wobei der drehbare Einsatz (7) einen achsparallelen, zu seiner Drehachse exzentrisch versetzten Zapfen (8), der in einen radialen Schlitz (9) eines wellenfesten Teils eingreift, sowie einen radialen Vorsprung (10) aufweist, der nach einer Drehung des Einsatzes (7) zur Herstellung einer axialen Verriegelung in eine radiale Ausnehmung der Welle (1) eingreift.

2. Welle nach Anspruch 1, dadurch gekennzeichnet, daß der wellenfeste Teil, in dessen radialen Schlitz (9) der Zapfen (8) des Einsatzes (7) eingreift, vom festen Exzenter (2) gebildet wird.

3. Welle nach Anspruch 1 oder 2, dadurch gekennzeichnet, daß der einstellbare Exzenter (4) und der Einsatz (7) durch Ausbildung von Vorsprüngen einerseits und Vertiefungen andererseits selbsthemmend zusammenwirken.

4. Welle nach einem der Ansprüche 1 bis 3, dadurch gekennzeichnet, daß der Einsatz (7) als Zeiger ausgebildet ist, der eine auf dem einstellbaren Exzenter (4) angeordnete Skala (11) überstreicht.

5. Welle nach Anspruch 4, dadurch gekennzeichnet, daß die Skala (11) und der Zeiger einerseits mit Vorsprüngen und andererseits mit Vertiefungen versehen sind, die selbsthemmend zusammenwirken.

## Claims

1. A shaft especially for a diaphragm gas meter comprising at least one eccentric cam assembly firmly coupled with said shaft and at least one other eccentric cam assembly adjustable to alter the angle between the two eccentric cam assemblies engaging around said shaft and lockable relative to said firm cam assembly by means of a rotatable insert protruding through an opening, arranged eccentrically, with an axis parallel to the shaft centerline, characterized in that the adjustable eccentric cam assembly (4) is placed on said shaft (1) and said rotatable insert (7) is inserted with a stopping means in said opening (6) of said adjustable eccentric cam assembly (4), said rotatable insert (7) having a pin (8) with an axis parallel to the shaft axis eccentrically displaced with respect to its axis of rotation for engaging in a radial groove (9) of an element firmly coupled with said shaft and is provided with a radial protrusion (10) for axial locking by engaging in a radial cutout in said shaft (1) after rotating said insert (7).

2. A shaft according to claim 1 characterized in that said element firmly coupled with said shaft having said radial groove (9) in which said pin (8) of said insert (7) engages is said firmly coupled eccentric cam assembly (2).

3. A shaft according to claim 1 or 2, characterized in that said adjustable eccentric cam assembly (4) and said insert (7) interact in a self-locking fashion by a system of protrusions and depressions.

4. A shaft according to any one of claims 1 through 3 characterized in that said insert (7) is a pointer moving over a graduation (11) provided on said adjustable eccentric cam assembly (4).

5. A shaft according to claim 4 characterized in that said graduation (11) and said pointer are provided with protrusions and depressions respectively, said protrusions and depressions interacting in a self-locking fashion.

**Revendications**

1. Arbre, en particulier pour compteurs à gaz à membranes, comprenant au moins une came excentrique connectée fermement audit arbre et au moins une autre came excentrique ajustable pour modifier l'angle entre les deux cames excentriques, enveloppant l'arbre et étant verrouillée par rapport à ladite came excentrique fixe à l'aide d'une garniture rotative, passant à travers une ouverture disposée excentriquement, avec un axe parallèle à l'axe de l'arbre, caractérisé par le fait que la came excentrique ajustable (4) est placée sur l'arbre (1) et la garniture rotative (7) est insérée avec un moyen d'arrêt dans l'ouverture (6) de ladite came excentrique ajustable (4), ladite garniture rotative (7) ayant un pivot (8) avec un axe parallèle à l'axe de l'arbre disposé excentriquement par rapport à son axe de rotation et s'engrenant dans une fente radiale (9) d'un élément connecté fermement audit arbre et muni d'une saillie radiale (10) pour un verrouillage axial par engrenage dans un creux radial de l'arbre (1) après rotation de ladite garniture (7).

2. Arbre selon la revendication 1, caractérisé par le fait que l'élément connecté fermement audit arbre, dans la fente radiale (9) duquel le pivot (8) de la garniture (7) s'engrène, est formé par la came excentrique fixe (2).

3. Arbre selon l'une quelconque des revendications 1 ou 2, caractérisé par le fait que la came excentrique ajustable (4) et la garniture (7) interagissent de manière autobloquante par un système de saillies et de creux.

4. Arbre selon l'une quelconque des revendications 1 à 3, caractérisé par le fait que la garniture (7) est conçue sous forme d'aiguille mouvant sur une graduation (11) disposée sur la came excentrique ajustable (4).

5. Arbre selon la revendication 4, caractérisé par le fait que la graduation (11) et ladite aiguille sont munies de saillies respectivement de creux qui interagissent de manière autobloquante.

Fig. 1

Fig. 2

Fig. 3

Fig. 4